# EUROPEAN PATENT APPLICATION

(11) **EP 2 779 532 A1**
(43) Date of publication of application: **17.09.2014**
(21) Application number: 13184500.0
(22) Date of filing: 16.09.2013
(51) Int. Cl.: H04L 12/28

(54) **Electrical equipment and communication apparatus**

(30) Priority: 14.03.2013 JP 2013052214
(71) Applicant: Toshiba Lighting & Technology Corporation, Yokosuka-shi, Kanagawa 237-8510 (JP)
(72) Inventor: Sasai, Toshihiko, Kanagawa, 237-8510 (JP); Ishikita, Toru, Kanagawa, 237-8510 (JP)
(74) Representative: Bokinge, Ole

(57) **Abstract**

A lighting apparatus (20a) includes a communication unit (21a) and a control unit (22a). The communication unit (21a) performs master-slave type communication with the communication adaptor (10a), outputs, as a master, a transmission request of a control signal to the communication adaptor (10a) which temporarily stores the control signal for controlling the lighting apparatus (20a), transmitted from equipment (6, 7) connected to the network (8), and receives the control signal transmitted from the communication adaptor (10a) in response to the transmission request. The control unit (22a) electrically controls the lighting apparatus (20a) on the basis of the control signal received by the communication unit (21a).

## Description

### FIELD

Embodiments described herein relate generally to electrical equipment and a communication apparatus.

### BACKGROUND

In recent years, a home network system appears which is provided in a house and enables electrical equipment such as a lighting apparatus installed in the house to be remotely operated. The electrical equipment is remotely operated via a network such that convenience of the electrical equipment may be increased, and management of the electrical equipment including monitoring of power consumption, equipment failure, or the like may be easily performed.

Specifically, the home network system monitors an operation state, power consumption, and the like of electrical equipment connected to a network represented by Ethernet (registered trademark), and sends a control signal via the network, thereby controlling an operation state of the electrical equipment. The home network system is provided with a dedicated network adaptor which communicates with the electrical equipment in order to transmit and receive a control signal.

However, in the above-described technique, when the electrical equipment and the dedicated network adaptor communicate with each other, troublesome procedures are gone through to establish and synchronize a communication link. For this reason, there is a problem in that a circuit configuration of the dedicated communication adaptor is not only complicated but a circuit configuration is also complicated in order to communicate with the dedicated communication adaptor on the electrical equipment side.

An object of the exemplary embodiments is to provide electrical equipment and a communication apparatus in which a circuit configuration related to communication between the electrical equipment and the communication apparatus in a home network system is simplified.

### DESCRIPTION OF THE DRAWINGS

FIG. 1 is a diagram illustrating a configuration of a household electrical appliance control system according to Embodiment 1.
FIG. 2 is a block diagram illustrating a configuration of a lighting apparatus and a communication adaptor according to Embodiment 1.
FIG. 3 is a flowchart illustrating a process in the lighting apparatus according to Embodiment 1.
FIG. 4 is a flowchart illustrating a process in the communication adaptor according to Embodiment 1.
FIG. 5 is a diagram illustrating a configuration of a household electrical appliance control system according to Embodiment 2.
FIG. 6 is a block diagram illustrating a configuration of a lighting apparatus and a communication adaptor according to Embodiment 2.
FIG. 7 is a flowchart illustrating a process in the lighting apparatus according to Embodiment 2.
FIG. 8 is a flowchart illustrating a process in the communication adaptor according to Embodiment 2.

### DETAILED DESCRIPTION

Hereinafter, with reference to the drawings, electrical equipment and a communication apparatus according to the embodiments will be described. In the embodiments, constituent elements having the same function are given the same reference numeral, and repeated description will be omitted. In addition, the electrical equipment and the communication apparatus described in the following embodiments are only an example, and are not intended to limit embodiments. For example, in the following embodiments, a lighting apparatus will be described as an example of the electrical equipment. However, electrical equipment is not limited thereto, and may be domestic electrical appliances such as an air conditioning apparatus, a washing machine, and a water heater, audio and visual equipment such as a television set and a television recorder, and the like. Further, the electrical equipment may be an amusement household electrical appliance such as a gaming machine, an information household electrical appliance such as a personal computer, photovoltaic power generation related equipment, or the like. In other words, the electrical equipment may be general household electronic products in a wide sense. Furthermore, the following embodiments may be appropriately combined in the scope without contradiction.

The following electrical equipment (for example, a lighting apparatus 20a) according to a first embodiment is electrical equipment (for example, the lighting apparatus 20a) which is connected to a network 8 via a communication apparatus (for example, a communication adaptor 10a). The electrical equipment (for example, the lighting apparatus 20a) performs master-slave type communication with the communication apparatus (for example, the communication adaptor 10a), outputs, as a master, a transmission request of a control signal to the communication apparatus (for example, the communication adaptor 10a) which temporarily stores the control signal for controlling the electrical equipment (for example, the lighting apparatus 20a), transmitted from equipment (for example, a user terminal 6, a management server 7) connected to the network 8. In addition, the electrical equipment (for example, the lighting apparatus 20a) receives the control signal transmitted from the communication apparatus (for example, the communication adaptor 10a) in response to the transmission request. Further, the electrical equipment (for example, the lighting apparatus 20a) electrically controls the electrical equipment (for example, the lighting apparatus 20a) on the basis of the received control signal.

In addition, the following electrical equipment (for example, a lighting apparatus 20b) according to a second embodiment is electrical equipment (for example, the lighting apparatus 20b) which is connected to a network 8 via a communication apparatus (for example, a communication adaptor 10b). The electrical equipment (for example, the lighting apparatus 20b) performs master-slave type communication with the communication apparatus (for example, a communication adaptor 10b), receives, as a slave, a reception request for receiving a control signal for controlling the electrical equipment (for example, the lighting apparatus 20b) from the communication apparatus (for example, the communication adaptor 10b), transmitted from equipment connected to the network 8. Further, the electrical equipment (for example, the lighting apparatus 20b) receives the control signal transmitted from the communication apparatus (for example, the communication adaptor 10b) in response to the reception request. Furthermore, the electrical equipment (for example, the lighting apparatus 20b) temporarily stores the received control signal. Moreover, the electrical equipment (for example, the lighting apparatus 20b) electrically controls the electrical equipment (for example, the lighting apparatus 20b) on the basis of the control signal read from a temporary storage unit (for example, a communication buffer 26b).

In addition, in the following electrical equipment (for example, the lighting apparatus 20a, 20b) according to a third embodiment, the communication apparatus (for example, the communication adaptor 10a, 10b) is additionally connected to the electrical equipment (for example, the lighting apparatus 20a, 20b). Further, the electrical equipment (for example, the lighting apparatus 20a, 20b) functions as separate electrical equipment even when the communication apparatus (for example, communication adaptor 10a, 10b) is not connected thereto.

In addition, in the following electrical equipment (for example, the lighting apparatus 20a, 20b) according to a fourth embodiment, the communication apparatus (for example, communication adaptor 10a, 10b) is inserted into a predetermined slot of the electrical equipment (for example, the lighting apparatus 20a, 20b) so as to be connected to the electrical equipment (for example, the lighting apparatus 20a, 20b).

In addition, in the following electrical equipment (for example, the lighting apparatus 20a, 20b) according to a fifth embodiment, the communication apparatus (for example, the communication adaptor 10b) is connected to a plurality of pieces of electrical equipment (for example, the lighting apparatus 20b).

In addition, the following communication apparatus (for example, a communication adaptor 10a) according to a sixth embodiment is a communication apparatus (for example, the communication adaptor 10a) which connects electrical equipment (for example, a lighting apparatus 20a) to a network 8. The communication apparatus (for example, the communication adaptor 10a) receives a control signal for controlling the electrical equipment (for example, the lighting apparatus 20a), transmitted from equipment (for example, a user terminal 6, a management server 7) connected to the network 8. Further, the communication apparatus (for example, the communication adaptor 10a) temporarily stores the received control signal. Furthermore, the communication apparatus (for example, the communication adaptor 10a) performs a master-slave type communication with the electrical equipment (for example, the lighting apparatus 20a), receives, as a slave, a transmission request of the control signal from the electrical equipment (for example, the lighting apparatus 20a), and reads the control signal from a temporary storage unit (for example, a communication buffer 15a) in response to the transmission request so as to be transmitted to the electrical equipment (for example, the lighting apparatus 20a).

In addition, the following communication apparatus (for example, a communication adaptor 10b) according to a seventh embodiment is a communication apparatus (for example, the communication adaptor 10b) which connects electrical equipment (for example, a lighting apparatus 20b) to a network 8. The communication apparatus (for example, the communication adaptor 10b) receives a control signal for controlling the electrical equipment (for example, the lighting apparatus 20b), transmitted from equipment connected to the network 8. Further, the communication apparatus (for example, the communication adaptor 10b) performs master-slave type communication with the electrical equipment (for example, the lighting apparatus 20b), outputs, as a master, a reception request of the control signal to the electrical equipment (for example, the lighting apparatus 20b), and transmits the control signal to the electrical equipment (for example, the lighting apparatus 20b) according to the reception request.

In addition, in the following communication apparatus (for example, the communication adaptor 10a, 10b) according to an eighth embodiment, the communication apparatus (for example, the communication adaptor 10a, 10b) is additionally connected to the electrical equipment (for example, the lighting apparatus 20a, 20b). Further, the electrical equipment (for example, the lighting apparatus 20a, 20b) functions as separate electrical equipment even when the communication apparatus (for example, the communication adaptor 10a, 10b) is not connected thereto.

In addition, in the following communication apparatus (for example, the communication adaptor 10a, 10b) according to a ninth embodiment, the communication apparatus (for example, the communication adaptor 10a, 10b) is inserted into a predetermined slot of the electrical equipment (for example, the lighting apparatus 20a, 20b) so as to be connected to the electrical equipment (for example, the lighting apparatus 20a, 20b).

In addition, in the following communication apparatus (for example, the communication adaptor 10b) according to a tenth embodiment, the communication apparatus (for example, the communication adaptor 10b) is connected to a plurality of pieces of electrical equipment (for example, lighting apparatus 20b).

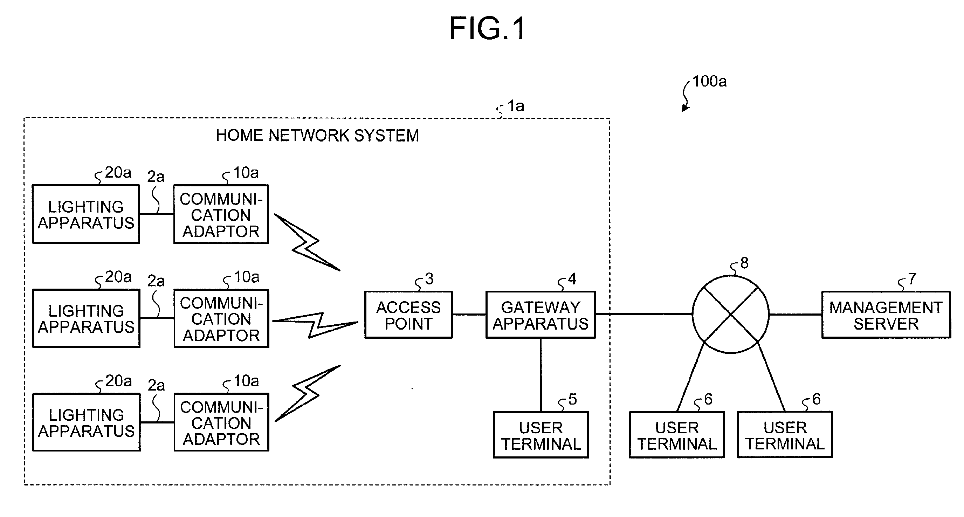

FIG. 1 is a diagram illustrating a configuration of a household electrical appliance control system according to Embodiment 1. A household electrical appliance control system 100a according to Embodiment 1 is a network of, for example, a home energy management system (HEMS) connected to electrical equipment. In the household electrical appliance control system 100a, a home network system 1a, a user terminal 6, a management server 7, a gateway apparatus 4 described later of the home network system 1a are connected to each other via a network 8. In addition, the number of the home network systems 1a, the user terminals 6, and the management servers 7 illustrated in FIG. 1 is only an example, and may be appropriately changed depending on a configuration of the household electrical appliance control system 100a.

The user terminal 6 is a portable electronic terminal such as a smart phone, a tablet terminal, or a notebook computer owned by a user. The user inputs a control instruction for a lighting apparatus 20a of a user's house to the user terminal 6. In addition, the control instruction includes an instruction for electrical control of the lighting apparatus 20a or an instruction for a request for notifying of a state of the lighting apparatus 20a. The user terminal 6 transmits the control instruction to the management server 7 via the network 8. Examples of the control instruction include that "the lighting apparatus is turned on", "a color tone emitted by the lighting apparatus is controlled", "a notification of power consumption of the lighting apparatus is sent", and the like. Further, the user terminal 6 receives a response to the control instruction from the management server 7.

When the control instruction for the lighting apparatus 20a is received from the user terminal 6, the management server 7 transmits the received control instruction to the gateway apparatus 4 of the home network system 1a of the user. In addition, when there is a response such as a notification of a control result corresponding to the control instruction for the lighting apparatus 20a or a notification of an equipment state from the gateway apparatus 4 of the home network system 1a, the management server 7 transmits the response to the user terminal 6.

The home network system 1a is a system which is provided in the user's house and controls the lighting apparatus 20a of the house on the basis of a control instruction received via the network 8. The home network system 1a includes the lighting apparatuses 20a, communication adaptors 10a respectively connected to the lighting apparatuses 20a via interfaces 2a, an access point 3, the gateway apparatus 4, and a user terminal 5. In addition, the number of sets of the communication adaptors 10a and the lighting apparatuses 20a, the access point 3, the gateway apparatus 4, and the user terminal 5 illustrated in FIG. 1 is only an example, and may be appropriately changed depending on a configuration of the home network system 1a.

The user terminal 5 is an electronic terminal such as a personal computer which is owned by the user and includes an input device and a display device. The user terminal 5 is connected to the gateway apparatus 4 via a closed area network such as a local area network (LAN). The user terminal 5 displays an instruction to the gateway apparatus 4 or information such as a state of the gateway apparatus 4 on the display device. In addition, the user terminal 5 transmits an instruction to the gateway apparatus 4, input from the input device, to the gateway apparatus 4. Further, in the same manner as the user terminal 6, the user terminal 5 is also connected to the network 8 via the gateway apparatus 4 and transmits a control instruction for the lighting apparatus 20a of the user's house to the management server 7.

When a control instruction for the lighting apparatus 20a transmitted from the management server 7 is received, the gateway apparatus 4 transmits the received control instruction to a target lighting apparatus 20a via the access point 3. In addition, when there is a response to the control instruction from the lighting apparatus 20a via the access point 3, the gateway apparatus 4 transmits the response to the management server 7.

The access point 3 performs wireless communication with the communication adaptor 10a through near field communication such as Bluetooth (registered trademark). For example, when a control instruction is received via the gateway apparatus 4, the access point 3 transmits the received control instruction to a communication adaptor 10a connected to a lighting apparatus 20a targeted by the received control instruction through near field communication. In addition, when a response to the control instruction is received from the communication adaptor 10a, the access point 3 transmits the response to the management server 7 via the gateway apparatus 4. Further, the communication adaptor 10a and the access point 3 may perform wired communication.

The communication adaptor 10a is an interface which relays communication between the lighting apparatus 20a connected thereto and the access point 3. For example, the communication adaptor 10a is connected to the lighting apparatus 20a via the interface 2a. In addition, the communication adaptor 10a performs near field communication with the access point 3 connected to the gateway apparatus 4. In other words, the communication adaptor 10a is connected to the lighting apparatus 20a and the gateway apparatus 4.

In addition, when a control instruction is received from the management server 7 via the access point 3 through near field communication, the communication adaptor 10a temporarily stores the received control instruction therein. Further, when there is a request for transmission of a control instruction from the lighting apparatus 20a connected to the communication adaptor 10a, the communication adaptor 10a transmits a control instruction which is temporarily stored therein to the lighting apparatus 20a. Furthermore, when there is a response to the control instruction from the lighting apparatus 20a connected to the communication adaptor 10a, the communication adaptor 10a transmits the response to the management server 7 via the access point 3 through near field communication.

When a control instruction transmitted from the communication adaptor 10a connected via the interface 2a is received, the lighting apparatus 20a performs control indicated by the control instruction. For example, when instruction content indicated by the control instruction is that "the lighting apparatus is turned on", the lighting apparatus 20a turns on a power supply thereof. In addition, when instruction content indicated by the control instruction is that "an illuminance of the lighting apparatus is set to 80%", the lighting apparatus 20a sets an illuminance of light emitted by a light source thereof to 80%. Further, the lighting apparatus 20a transmits an execution result of the control instruction to the communication adaptor 10a as a response.

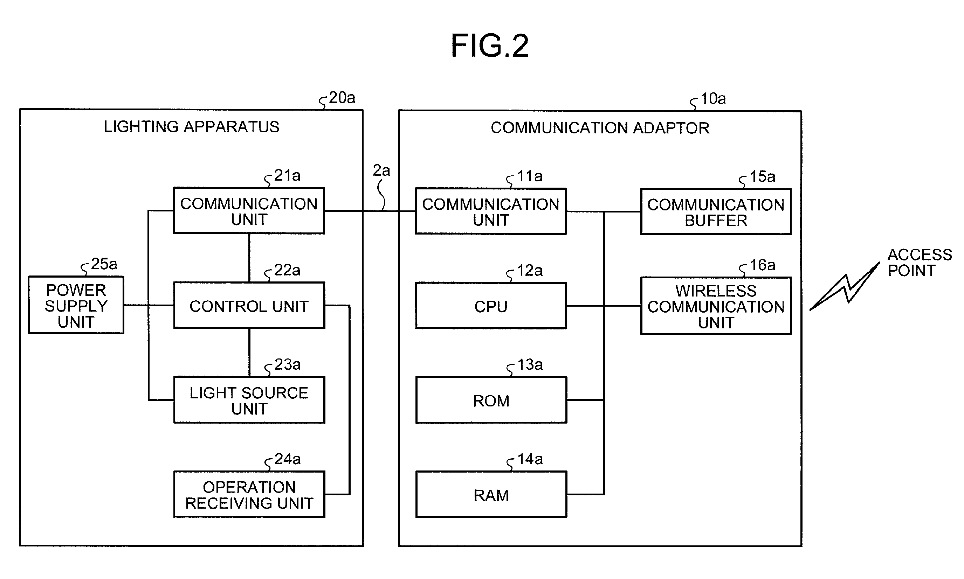

FIG. 2 is a block diagram illustrating a configuration of the lighting apparatus and the communication adaptor according to Embodiment 1. The communication adaptor 10a and the lighting apparatus 20a are connected to each other via the interface 2a. In addition, the lighting apparatus 20a functions as a separate lighting apparatus when the communication adaptor 10a is not connected thereto. When connected to the lighting apparatus 20a, the communication adaptor 10a may be inserted into a slot of the lighting apparatus 20a as a module. Alternatively, when connected to the lighting apparatus 20a, the communication adaptor 10a may be additionally installed in a part of a casing of the lighting apparatus 20a.

The lighting apparatus 20a includes a communication unit 21a, a control unit 22a, a light source unit 23a, an operation receiving unit 24a, and a power supply unit 25a. The communication unit 21a is connected to a communication unit 11a described later of the communication adaptor 10a via the interface 2a. The communication unit 21a performs master-slave type communication with the communication adaptor 10a. The communication unit 21a functions as a master in the master-slave type in communication with the communication adaptor 10a.

In other words, the communication unit 21a takes the initiative in communication when communication with the communication adaptor 10a is performed, and spontaneously and independently outputs a request for transmission of a control instruction to the communication adaptor 10a. In addition, the communication unit 21a receives a control instruction with a data transmission format which is transmitted by the communication adaptor 10a in response to the request for transmission of a control instruction. The control instruction with a data transmission format indicates communication data such as a packet, a cell, or a frame including a control instruction. Further, the communication unit 21a analyzes the received control instruction with a data transmission format so as to acquire content of the control instruction, and immediately makes the control unit 22a, which will be described later, execute the content of the control instruction.

In addition, the communication unit 21a spontaneously and independently outputs a request for reception of a response to the control instruction to the communication adaptor 10a. Further, the communication unit 21a converts a response generated by the control unit 22a described later into a response with a data transmission format according to the request for reception of a response, and transmits the response with the data transmission format to the communication adaptor 10a. The response with the data transmission format indicates communication data such as a packet, a cell, or a frame including a response to a control instruction. In addition, the communication adaptor 10a temporarily stores the response with the data transmission format received from the communication unit 21a, in a communication buffer 15a described later of the communication adaptor 10a.

The control unit 22a is a control unit which electrically controls the entire lighting apparatus 20a including the light source unit 23a and the power supply unit 25a of the lighting apparatus 20a. The control unit 22a electrically controls the lighting apparatus 20a on the basis of content of a control instruction which is received from the user terminal 6 via the management server 7 and the communication adaptor 10a in addition to content of a control instruction which is directly input to the lighting apparatus 20a by the user via the operation receiving unit 24a. For example, the control unit 22a controls the light source unit 23a so as to control an illuminance of light in response to a control instruction from the operation receiving unit 24a or the management server 7. In addition, the control unit 22a controls the power supply unit 25a so as to stop the supply of power to the light source unit 23a in response to a control instruction from the operation receiving unit 24a or the management server 7.

Further, when a control instruction is sent from the management server 7, the control unit 22a causes a control result based on the control instruction, for example, a response such as control normal completion or uncontrollable state to be immediately transmitted from the communication unit 21a to the communication adaptor 10a. Furthermore, the communication adaptor 10a temporarily stores the response from the lighting apparatus 20a therein, and then sequentially transmits the response to the management server 7.

In addition, the operation receiving unit 24a is an operation panel of the lighting apparatus 20a or a remote controller. The operation receiving unit 24a may receive not only power-on and power-off of the lighting apparatus 20a but also inputs such as setting of a color tone of the light source, setting of an illuminance of the light source, and setting of timer power supply control. Further, the power supply unit 25a supplies power to the communication unit 21a, the control unit 22a, and the light source unit 23a.

The communication adaptor 10a includes a communication unit 11a, a central processing unit (CPU) 12a, a read only memory (ROM) 13a, a random access memory (RAM) 14a, a communication buffer 15a, and a wireless communication unit 16a. The communication unit 11a communicates with the lighting apparatus 20a via the interface 2a. The communication unit 11a is connected to the lighting apparatus 20a via the interface 2a. The communication unit 11a functions as a slave in the master-slave type in communication with the lighting apparatus 20a.

In other words, the communication unit 11a does not take the initiative in communication when communication with the lighting apparatus 20a is performed. In addition, the communication unit 11a reads a control instruction from the management server 7, which is temporarily stored in the communication buffer 15a, in response to a transmission request from the lighting apparatus 20a, and transmits content obtained by analyzing the control instruction with a data transmission format, to the lighting apparatus 20a. Further, the lighting apparatus 20a executes the content of the control instruction received from the communication unit 11a.

In addition, the communication unit 11a receives a response from the lighting apparatus 20a in response to a reception request from the lighting apparatus 20a. Further, the communication unit 11a converts the response received from the lighting apparatus 20a into a response with a data transmission format so as to be temporarily stored in the communication buffer 15a.

The CPU 12a controls the entire communication adaptor 10a. Specifically, the CPU 12a reads a predetermined program stored in the ROM 13a and performs a predetermined process in cooperation with the RAM 14a. Specifically, the CPU 12a temporarily stores control information which is received from the management server 7 via the wireless communication unit 16a, in the communication buffer 15a. In addition, the CPU 12a transmits the response which is temporarily stored in the communication buffer 15a and is received from the lighting apparatus 20a, to the management server 7 via the wireless communication unit 16a.

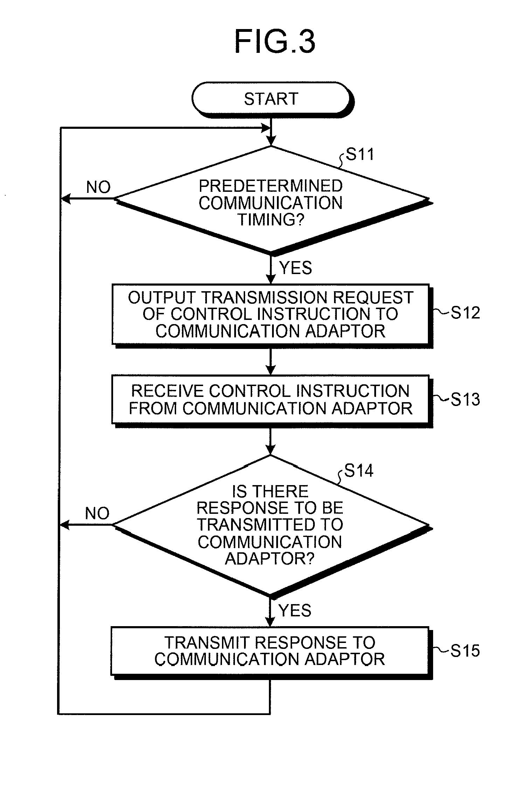

FIG. 3 is a flowchart illustrating a process in the lighting apparatus according to Embodiment 1. As illustrated in FIG. 3, first, the communication unit 21a of the lighting apparatus 20a determines whether or not the current time is a predetermined communication timing (Act 11). Specifically, the communication unit 21a determines whether or not there is a request for reception of a control instruction from the control unit 22a. Alternatively, the communication unit 21a determines whether or not the current time reaches a predefined communication timing.

When the current time is the predetermined communication timing (Yes in Act 11), the communication unit 21a proceeds to a process in Act 12, and, when the current time is not the predetermined communication timing (No in Act 11), the communication unit 21a repeatedly performs the process in Act 11. In Act 12, the communication unit 21a outputs a request for transmission of a control instruction to the communication adaptor 10a (Act 12).

Subsequently, in Act 13, the communication unit 21a receives the control instruction which is requested to be transmitted in Act 12 from the communication adaptor 10a. The control unit 22a electrically controls the lighting apparatus 20a on the basis of content obtained by analyzing the control instruction which is received by the communication unit 21a. Subsequently, the communication unit 21a determines whether or not there is a response to be transmitted to the communication adaptor 10a (Act 14). When it is determined that there is a response to be transmitted to the communication adaptor 10a (Yes in Act 14), the communication unit 21a proceeds to a process in Act 15. On the other hand, when it is determined that there is no response to be transmitted to the communication adaptor 10a (No in Act 14), the communication unit 21a proceeds to the process in Act 11.

Successively, in Act 15, the communication unit 21a transmits a response to the communication adaptor 10a. When the process in Act 15 finishes, the communication unit 21a proceeds to the process in Act 11.

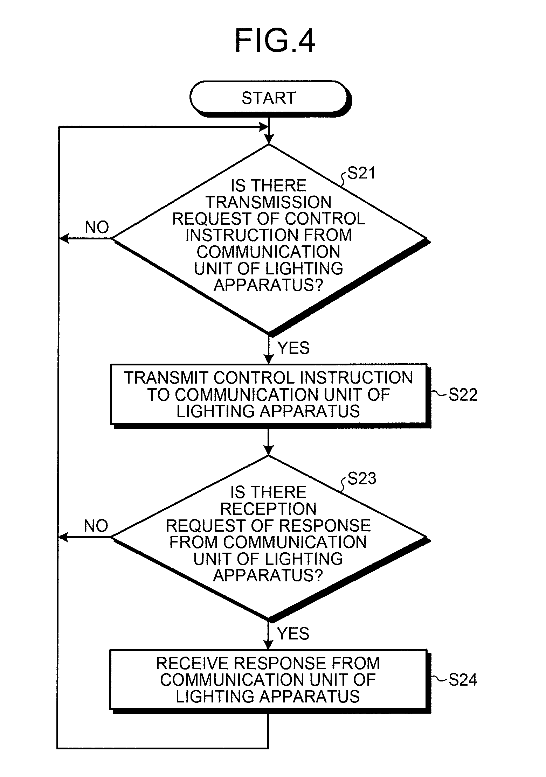

FIG. 4 is a flowchart illustrating a process in the communication adaptor according to Embodiment 1. First, the communication unit 11a of the communication adaptor 10a determines whether or not there is a request for transmission of a control instruction from the communication unit 21a of the lighting apparatus 20a (Act 21). When it is determined that there is a request for transmission of a control instruction from the communication unit 21a of the lighting apparatus 20a (Yes in Act 21), the communication unit 11a proceeds to a process in Act 22. On the other hand, when it is determined that there is no request for transmission of a control instruction from the communication unit 21a of the lighting apparatus 20a (No in Act 21), the communication unit 11a repeatedly performs the process in Act 21.

Successively, in Act 22, the communication unit 11a reads a control instruction which is temporarily stored in the communication buffer 15a, for example, in a First In First Out (FIFO) manner. In addition, the communication unit 11a transmits the read control instruction to the communication unit 21a of the lighting apparatus 20a.

Successively, the communication unit 11a determines whether or not there is a request for reception of a response to the control instruction from the communication unit 21a of the lighting apparatus 20a (Act 23). When it is determined that there is a request for reception of a response to the control instruction from the communication unit 21a of the lighting apparatus 20a (Yes in Act 23), the communication unit 11a proceeds to a process in Act 24. On the other hand, when it is determined that there is no request for reception of a response to the control instruction from the communication unit 21a of the lighting apparatus 20a (No in Act 23), the communication unit 11a proceeds to the process in Act 21.

Subsequently, in Act 24, the communication unit 11a receives a response from the communication unit 21a of the lighting apparatus 20a. The communication unit 11a converts the received response into a response with a data transmission format, and temporarily stores the converted response with the data transmission format in the communication buffer 15a. When the process in Act 24 finishes, the communication unit 11a proceeds to the process in Act 21.

In addition, the processes in the lighting apparatus and the communication adaptor according to Embodiment 1 illustrated in FIGS. 3 and 4, the communication unit 21a of the lighting apparatus 20a and the communication unit 11a of the communication adaptor 10a transmit and receive a control instruction, and then transmit and receive a response to the control instruction. However, an embodiment is not limited thereto, and transmission and reception processes of a control instruction, and transmission and reception processes of a response may be performed independently from each other.

According to Embodiment 1 described above, in communication between the lighting apparatus 20a and the communication adaptor 10a, the communication unit 21a of the lighting apparatus 20a takes the initiative in communication and performs communication in a master-slave form. For this reason, since communication procedures between the lighting apparatus 20a and the communication adaptor 10a are simplified, a circuit related to communication between the lighting apparatus 20a and the communication adaptor 10a may be simplified, and thus costs of a circuit configuration may be reduced and fault tolerance of a circuit may be improved.

In addition, since, in communication between the lighting apparatus 20a and the communication adaptor 10a, the communication unit 21a of the lighting apparatus 20a takes the initiative in communication, the lighting apparatus 20a timely communicates with the communication unit 11a of the communication adaptor 10a depending on process load circumstances thereof. For this reason, a process load of the lighting apparatus 20a related to communication with the communication adaptor 10a may be reduced. Further, since the lighting apparatus 20a communicates with the communication adaptor 10a at preferable timing therein, the lighting apparatus 20a may be provided with no communication buffer which temporarily stores data transmitted to and received from the communication adaptor 10a. For this reason, in terms of a separate lighting apparatus 20a, manufacturing costs may be reduced, and thus the lighting apparatus 20a may be provided to users at a cheap price.

In addition, the lighting apparatus 20a may be made to participate in the household electrical appliance control system 100a only when the communication adaptor 10a is formed separately from the lighting apparatus 20a, and the communication adaptor 10a is connected thereto via the interface 2a. For this reason, when the lighting apparatus 20a is used separately when the lighting apparatus 20a is initially introduced, and the lighting apparatus 20a is made to participate in the household electrical appliance control system 100a in the future, an initial cost may be suppressed. For this reason, there is an advantage in that the spread of the lighting apparatus 20a which corresponds to the household electrical appliance control system 100a may be accelerated. Further, when the communication adaptor 10a is cheaply supplied in the future, the household electrical appliance control system 100a including the lighting apparatus 20a may be easily built, and thus there is an advantage in that the spread of the household electrical appliance control system 100a may be further accelerated.

In addition, in Embodiment 1 described above, the communication unit 21a analyzes content of a control instruction with a data transmission format and generates a response with a data transmission format based on a response to the control instruction. However, an embodiment is not limited thereto, and the control unit 22a may analyze content of a control instruction with a data transmission format and generate a response with a data transmission format based on a response to the control instruction.

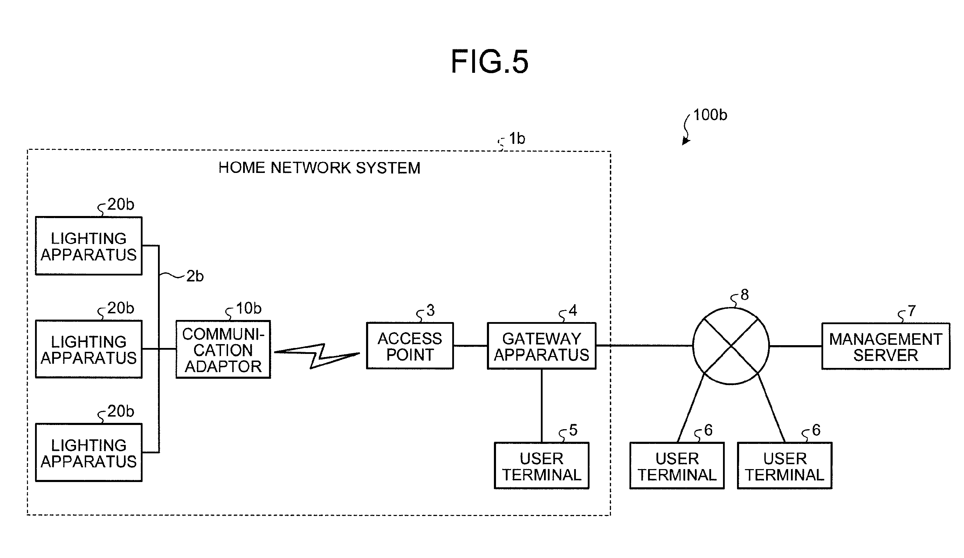

FIG. 5 is a diagram illustrating a configuration of a household electrical appliance control system according to Embodiment 2. When a household electrical appliance control system 100b according to Embodiment 2 is compared with the household electrical appliance control system 100a according to Embodiment 1, differences therebetween are as follows. That is, as illustrated in FIG. 5, in a home network system 1b according to Embodiment 2, a plurality of lighting apparatuses 20b are connected to a single communication adaptor 10b via an interface 2b. In addition, the communication adaptor 10b functions as a master in the master-slave type in communication between the lighting apparatus 20b and the communication adaptor 10b, and the lighting apparatus 20b functions as a slave.

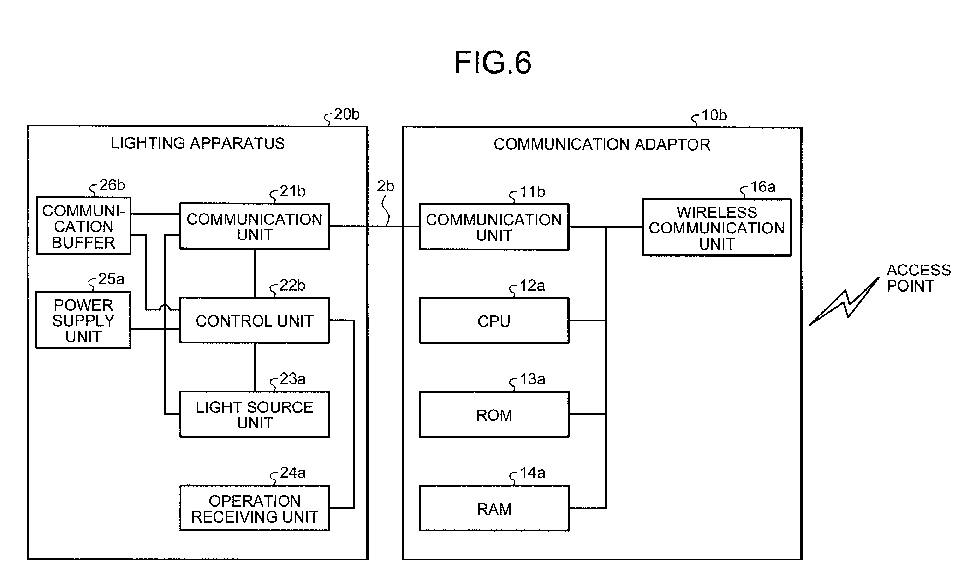

FIG. 6 is a block diagram illustrating a configuration of the lighting apparatus and the communication adaptor according to Embodiment 2. In addition, in Embodiment 2, a plurality of lighting apparatuses 20b are connected to a single communication adaptor 10b, but a description of a plurality of lighting apparatuses 20b is omitted in FIG. 6. The communication adaptor 10b and the lighting apparatus 20b are connected to each other via the interface 2b. In addition, in the same manner as in Embodiment 1, the lighting apparatus 20b functions as a separate lighting apparatus when the communication adaptor 10b is not connected thereto. Further, in the same manner as in Embodiment 1, when connected to the lighting apparatus 20b, the communication adaptor 10b is inserted into a slot of the lighting apparatus 20b as a module, or is additionally installed in a part of a casing of the lighting apparatus 20b.

The lighting apparatus 20b includes a communication unit 21b, a control unit 22b, a light source unit 23a, an operation receiving unit 24a, a power supply unit 25a, and a communication buffer 26b. The communication unit 21b is connected to a communication unit 11b described later of the communication adaptor 10b via the interface 2b. The communication unit 21b performs master-slave type communication with the communication adaptor 10b. The communication unit 21b functions as a slave in the master-slave type in communication with the communication adaptor 10b.

In other words, the communication unit 21b does not take the initiative in communication when communication with the communication adaptor 10b is performed. That is, the communication adaptor 10b spontaneously and independently outputs a request for reception of a control instruction to the lighting apparatus 20b. In addition, the communication unit 21b receives a control instruction with a data transmission format, transmitted by the communication adaptor 10b according to the request for reception of the control instruction. Further, the communication unit 21b temporarily stores the received control instruction in the communication buffer 26b described later.

In addition, the communication unit 21b transmits a response with a data transmission format corresponding to the control instruction which is temporarily stored in the communication buffer 26b, to the communication adaptor 10b, in response to a request for transmission of the response which is spontaneously and independently made by the communication adaptor 10b. Further, the communication adaptor 10b immediately transmits the response received from the communication unit 21b to the management server 7.

The control unit 22b is a control unit which electrically controls the entire lighting apparatus 20b including the light source unit 23a and the power supply unit 25a of the lighting apparatus 20b. The control unit 22b electrically controls the lighting apparatus 20b on the basis of content of a control instruction which is directly input to the lighting apparatus 20a by the user via the operation receiving unit 24a. In addition, the control unit 22b electrically controls the lighting apparatus 20b on the basis of content of a control instruction which is received from the user terminal 6 via the management server 7 and the communication adaptor 10b and is temporarily stored in the communication buffer 26b. For example, the control unit 22b controls the power supply unit 25a which supplies power to the communication unit 21b, the control unit 22b, and the light source unit 23a, so as to control an intensity of light emitted by the light source unit 23a.

When the control unit 22b is compared with the control unit 22a according to Embodiment 1, differences are as follows. That is, the control unit 22b monitors whether or not a control instruction from the management server 7 is temporarily stored in the communication buffer 26b. In addition, when a control instruction from the management server 7 is temporarily stored in the communication buffer 26b, the control unit 22b reads a control instruction with a data transmission format from the communication buffer 26b. Further, the control unit 22b analyzes the read control instruction with a data transmission format so as to acquire content of the control instruction. Furthermore, the control unit 22b electrically controls the lighting apparatus 20b according to the acquired content of the control instruction.

In addition, the control unit 22b generates a control result of electrically controlling the lighting apparatus 20b according to the content of the control instruction, or a state of the lighting apparatus 20b which is acquired based on the content of the control instruction, as a response to the control instruction. Further, the control unit 22b converts the generated response to the control instruction into a response with a data transmission format so as to be temporarily stored in the communication buffer 26b. The response which is temporarily stored in the communication buffer 26b is read by the communication unit 21b at timing when the communication adaptor 10b makes a request for transmission thereof, and is transmitted to the communication adaptor 10b.

The communication adaptor 10b includes a communication unit 11b, a CPU 12a, a ROM 13a, a RAM 14a, and a wireless communication unit 16a. The communication unit 11b communicates with the lighting apparatus 20b via the interface 2b. The communication unit 11b is connected to the lighting apparatus 20b via the interface 2b. The communication unit 11b functions as a master in the master-slave type in communication with the lighting apparatus 20b.

In other words, the communication unit 11b takes the initiative in communication when communication with the lighting apparatus 20b is performed, and spontaneously and independently outputs a request for reception of a control instruction to the lighting apparatus 20b. For example, when a control instruction is received from the management server 7 via the wireless communication unit 16a, the communication unit 11b immediately outputs a request for reception of the control instruction to the lighting apparatus 20b. In addition, the communication unit 11b transmits the control instruction with a data transmission format to the lighting apparatus 20b according to the request for reception. Further, the communication unit 21b of the lighting apparatus 20b temporarily stores the control instruction received from the communication unit 11b in the communication buffer 26b. Furthermore, the control unit 22b of the lighting apparatus 20b analyzes the control instruction which is temporarily stored in the communication buffer 26b, and electrically controls the lighting apparatus 20b according to content of the control instruction.

In addition, the communication unit 11b spontaneously and independently outputs a request for transmission of a response to the control instruction to the lighting apparatus 20b. Further, the communication unit 21b of the lighting apparatus 20b transmits the response which is temporarily stored in the communication buffer 26b to the communication unit 11b of the communication adaptor 10b in response to the request for transmission of the response. Furthermore, the communication unit 11b of the communication adaptor 10b immediately transmits the response to the control instruction, received from the communication unit 21b, to the management server 7 via the wireless communication unit 16a.

In addition, the communication unit 11b communicates with a plurality of communication units 21b of a plurality of respective lighting apparatuses 20b in a one-to-many relationship, but performs communication control such as collision prevention so as to control traffic for efficient circulation.

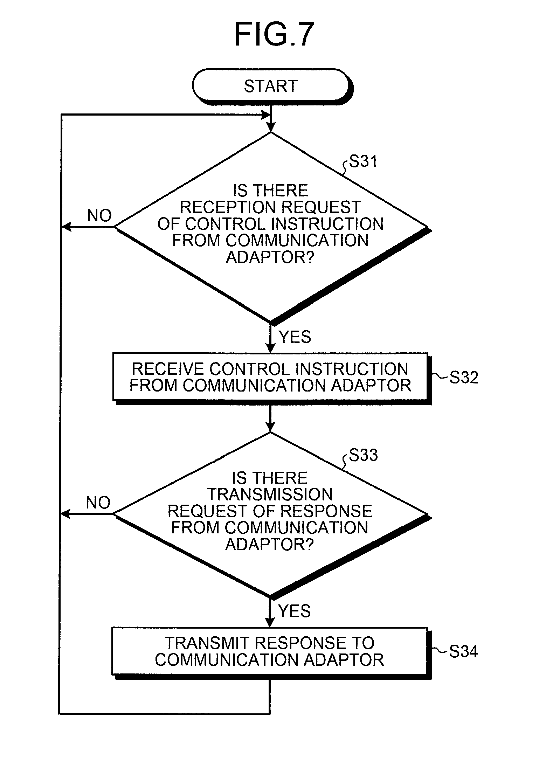

FIG. 7 is a flowchart illustrating a process in the lighting apparatus according to Embodiment 2. First, the communication unit 21b of the lighting apparatus 20b determines whether or not there is a request for reception of a control instruction from the communication unit 11b of the communication adaptor 10b (Act 31). When it is determined that there is a request for reception of a control instruction from the communication unit 11b of the communication adaptor 10b (Yes in Act 31), the communication unit 11b proceeds to a process in Act 32. On the other hand, when it is determined that there is no request for reception of a control instruction from the communication unit 11b of the communication adaptor 10b (No in Act 31), the communication unit 21b repeatedly performs the process in Act 31.

Successively, in Act 32, the communication unit 21b receives a control instruction from the communication unit 11b of the communication adaptor 10b, so as to be temporarily stored in the communication buffer 26b. Subsequently, the communication unit 21b determines whether or not there is a request for transmission of a response to the control instruction from the communication unit 11b of the communication adaptor 10b (Act 33). When it is determined that there is a request for transmission of a response to the control instruction from the communication unit 11b of the communication adaptor 10b (Yes in Act 33), the communication unit 21b proceeds to a process in Act 34. On the other hand, when it is determined that there is no request for transmission of a response to the control instruction from the communication unit 11b of the communication adaptor 10b (No in Act 33), the communication unit 21b proceeds to the process in Act 31.

Successively, in Act 34, the communication unit 21b reads a response with a data transmission format which is temporarily stored in the communication buffer 26b and transmits the response to the communication unit 11b of the communication adaptor 10b. When the process in Act 34 finishes, the communication unit 21b proceeds to the process in Act 31.

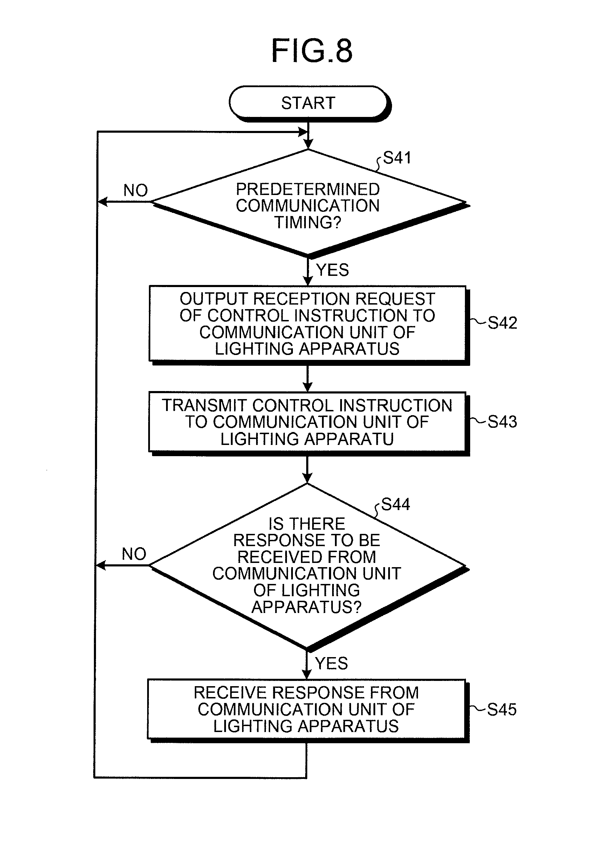

FIG. 8 is a flowchart illustrating a process in the communication adaptor according to Embodiment 2. As illustrated in FIG. 8, first, the communication unit 11b of the communication adaptor 10b determines whether or not the current time is a predetermined communication timing (Act 41). Specifically, the communication unit 11b determines whether or not there is a request for reception of a control instruction from the CPU 12a. Alternatively, the communication unit 11b determines whether or not the current time reaches a predefined communication timing.

When it is determined that the current time is the predetermined communication timing (Yes in Act 41), the communication unit 11b proceeds to a process in Act 42, and, when the current time is not the predetermined communication timing (No in Act 41), the communication unit 11b repeatedly performs the process in Act 41. In Act 42, the communication unit 11b outputs a request for reception of a control instruction to the lighting apparatus 20b (Act 42). In addition, the process in Act 42 may be omitted, and, when it is determined that the current time is the predetermined timing in Act 41, the communication unit 11b may immediately proceed to the process in Act 43.

Successively, in Act 43, the communication unit 11b transmits the control instruction which is requested to be received in Act 42, to the communication unit 21b of the lighting apparatus 20b. Subsequently, the communication unit 11b determines whether or not there is a response to be received from the lighting apparatus 20b (Act 44). When it is determined that there is no response to be received from the lighting apparatus 20b (Yes in Act 44), the communication unit 11b proceeds to a process in Act 45. On the other hand, when it is determined that there is no response to be received from the lighting apparatus 20b (No in Act 44), the communication unit 11b proceeds to the process in Act 41.

Next, in Act 45, the communication unit 11b receives a response from the lighting apparatus 20b. The CPU 12a of the communication adaptor 10b immediately transmits the response received from the lighting apparatus 20b, to the management server 7 via the wireless communication unit 16a. When the process in Act 45 finishes, the communication unit 11b proceeds to the process in Act 41.

In addition, in the processes in the lighting apparatus and the communication adaptor according to Embodiment 2 illustrated in FIGS. 7 and 8, the communication unit 21b of the lighting apparatus 20b and the communication unit 11b of the communication adaptor 10b transmit and receive a control instruction, and then transmit and receive a response to the control instruction. However, an embodiment is not limited thereto, and transmission and reception processes of a control instruction, and transmission and reception processes of a response may be performed independently from each other.

According to Embodiment 2 described above, in addition to the effects of Embodiment 1, since a single communication adaptor 10b is shared by a plurality of lighting apparatuses 20b, a cost of the communication adaptor 10b may be reduced when the household electrical appliance control system 100b is built. In addition, since the communication adaptor 10b is shared by a plurality of lighting apparatuses 20b, a network configuration of the household electrical appliance control system 100b may be simplified. Further, since the communication adaptor 10b is shared by a plurality of lighting apparatuses 20b, communication between a plurality of lighting apparatuses 20b and the management server 7 may be easily managed by a single communication adaptor 10b.

In addition, in Embodiment 2 described above, the control unit 22b analyzes content of a control instruction with a data transmission format and generates a response with a data transmission format based on a response to the control instruction. However, an embodiment is not limited thereto, and the communication unit 21b may analyze content of a control instruction with a data transmission format and generate a response with a data transmission format based on a response to the control instruction.

The above Embodiments 1 and 2 relate to a system including a lighting apparatus fitted to a HEMS connected to a network, and the system monitors an operation state, power consumption, and the like of electrical equipment connected to the network, and sends a control signal via the network so as to control an operation state of the electrical equipment. This system uses a communication adaptor which transmits and receives a control signal and a response to and from the electrical equipment and is connected to the electrical equipment. In a case of relatively cheap electrical equipment such as a lighting apparatus, a communication adaptor is expensive, and when the communication adaptor is incorporated into the lighting apparatus in advance, this forces a user who does not use a household electrical appliance control system to incur a cost thereof. For this reason, preferably, a user who uses a household electrical appliance control system selectively incurs a cost of the communication adaptor.

In the household electrical appliance control system, generally, a communication adaptor connected to electrical equipment frequently performs processes up to the sixth layer of Open Systems Interconnection (OSI) basic reference model. This communication adaptor has an additional function of taking charge of the application layer of the seventh layer in order to associate with electrical equipment. In this case, since the communication adaptor is an advanced circuit, built-in electrical equipment is also expensive, and thus this is one of factors in which a network fitted to the electrical equipment does not spread.

In addition, there is a configuration in which a plurality of circuits are built in a single casing depending on electrical equipment. For example, a light emission diode (LED) lighting apparatus may change a color tone by changing a light bulb color, white, and a daylight color, combinations of a light bulb color, white, and a daylight color, or combinations of RGB. This lighting apparatus is equipped with a plurality of power supplies for lighting. In a case of the lighting apparatus, when a plurality of communication adaptors are necessary, a problem occurs in which a cost of the communication adaptors increases, and a casing size of electrical equipment also increases. In addition, a problem also occurs in terms of a network configuration, such as a network cable being connected to a plurality of pieces of electrical equipment including the lighting apparatus.

Therefore, as illustrated in Embodiment 2, since signal information used to monitor and control a lighting apparatus and the like has less information volume than general computer network communication, it is considered that pieces of electrical equipment are connected in a form of a plurality of buses using a single communication adaptor. In this case, it is managed such that collision of signals does not occur in connection between the communication adaptor and the pieces of electrical equipment. In order to perform such management, a master-slave type is useful. In Embodiment 1, an electrical equipment side including a lighting apparatus is set as a master, and a communication adaptor side is set as a slave, thereby simplifying a communication control process. In Embodiment 2, an electrical equipment side including a lighting apparatus is set as a slave, and a communication adaptor side is set as a master, thereby simplifying a communication control process.

In communication between an electrical equipment side including a lighting apparatus and a communication adaptor, the master-slave type is used, and the electrical equipment side or the communication adaptor side is set as a mater, thereby performing a communication process at preferable timing such that software design of communication control may be simplified.

As described above, according to Embodiments 1 and 2, a circuit configuration related to communication in a home network system is simplified.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. Electrical equipment (20a) that is connected to a network (8) via a communication apparatus (10a), comprising:
a communication unit (21a) which performs master-slave type communication with the communication apparatus (10a), outputs, as a master, a transmission request of a control signal to the communication apparatus (10a) which temporarily stores the control signal for controlling the electrical equipment (20a), transmitted from equipment (6, 7) connected to the network (8), and receives the control signal transmitted from the communication apparatus (10a) in response to the transmission request; and
a control unit (22a) which electrically controls the electrical equipment (20a) on the basis of the control signal received by the communication unit (21a).

2. The electrical equipment (10a, 10b) according to claim 1, wherein the communication apparatus (10a, 10b) is additionally connected to the electrical equipment (20a, 20b), and
wherein the electrical equipment (20a, 20b) functions as separate electrical equipment even when the communication apparatus (10a, 10b) is not connected thereto.

3. The electrical equipment (20a, 20b) according to claim 2, wherein the communication apparatus (10a, 10b) is inserted into a predetermined slot of the electrical equipment (20a, 20b) so as to be connected to the electrical equipment (20a, 20b).

4. A communication apparatus (10a) that connects electrical equipment (20a) to a network (8), comprising:
a reception unit (16a) which receives a control signal for controlling the electrical equipment (20a), transmitted from equipment (6, 7) connected to the network (8);
a temporary storage unit (15a) which temporarily stores the control signal received by the reception unit (16a); and
a communication unit (11a) which performs a master-slave type communication with the electrical equipment (20a), receives, as a slave, a transmission request of the control signal from the electrical equipment (20a), and reads the control signal from the temporary storage unit (15a) in response to the transmission request so as to be transmitted to the electrical equipment (20a).

5. The communication apparatus (10a, 10b) according to claim 4, wherein the communication apparatus (10a, 10b) is additionally connected to the electrical equipment (20a, 20b), and
wherein the electrical equipment (20a, 20b) functions as separate electrical equipment even when the communication apparatus (10a, 10b) is not connected thereto.

6. The communication apparatus (10a, 10b) according to claim 5, wherein the communication apparatus (10a, 10b) is inserted into a predetermined slot of the electrical equipment (20a, 20b) so as to be connected to the electrical equipment (20a, 20b).
